# EUROPÄISCHE PATENTSCHRIFT

(11) **EP 0 861 757 B1**
(45) Veröffentlichungstag und Bekanntmachung des Hinweises auf die Patenterteilung: **29.08.2001**
(21) Anmeldenummer: 98101712.2
(22) Anmeldetag: 02.02.1998
(51) Int. Cl.: B60R 21/06, B60R 5/04

(54) **Laderaum-Trennvorrichtung für Kraftwagen, insbesondere für Kombinations-Personenkraftwagen**
Luggage compartment partitioning device for motor vehicles, in particular for estate cars
Dispositif de séparation d'un compartiment à bagages pour véhicules automobiles, en particulier pour breaks

(30) Priorität: 26.02.1997 DE 19707674
(43) Veröffentlichungstag der Anmeldung: 02.09.1998
(73) Patentinhaber: PETER BUTZ GmbH & Co Verwaltungs-KG, 40764 Langenfeld (DE)
(72) Erfinder: Labeur, Luc, 3010 Kessel-Lo (BE); Van Lieshout, Steven, 2440 Geel (BE)
(74) Vertreter: Patentanwälte Ostriga & Sonnet

(56) Entgegenhaltungen:
- EP-A- 0 754 594
- US-A- 4 668 001
- US-A- 5 584 523

## Beschreibung

Die Erfindung betrifft eine Laderaum-Trennvorrichtung für Kraftwagen, insbesondere für Kombinations-Personenkraftwagen, entsprechend der US-A-5 584 523.

Bei der bekannten Laderaum-Trennvorrichtung ist die Wickelwelle mit einem Federmotor versehen, dessen Drehmoment der Abrollbewegung der Werkstoffbahn entgegenwirkt. Bei der Werkstoffbahn kann es sich um eine Folie, ein Netz oder um ein anderes textiles flexibles bzw. biegeschlaffes Flächengebilde handeln.

Das die Wickelwelle aufnehmende, von zwei Rollogehäuse-Endkappen und einem Rollogehäuse-Mantel gebildete Rollogehäuse kann grundsätzlich an beliebigen Stellen des fahrzeugseitigen Einbaufeldes montiert werden. Überwiegend üblich ist ein sich nahezu über die gesamte Laderaumbreite erstreckendes Rollogehäuse, das hinter den Fondsitzen eines Kombinations-Personenkraftwagens, insbesondere an der Rückfläche der Fondsitzlehnen, gehalten ist.

Um die Werkstoffbahn der bekannten Laderaum-Trennvorrichtung in ihre Betriebsstellung zu versetzen, kann diese entweder oberhalb des Rollogehäuses oben im Fahrzeug oder benachbart bzw. an der klappenartigen Hecktür lösbar befestigt sein. Zur Befestigung ist der freie Endbereich der Werkstoffbahn zumeist mit einer Zugstange versehen, deren beidendseitig angeordnete Befestigungsköpfe in korrelierende fahrzeugseitige Einhängeösen eingeschoben werden können.

Zur Sicherung der sich in ihrer Betriebsstellung befindlichen aufgespannten bzw. abgerollten Werkstoffbahn kann der Wickelwelle z.B. ein Formrichtgesperre zugeordnet sein, welches die Wickelwelle gegen ein ungewolltes Abrollen der Werkstoffbahn blockiert (s. DE-27 49 560 A1). Dieses ist bei einem plötzlichen Aufprall des Ladeguts auf die Werkstoffbahn, z.B. bei einer unvorhergesehenen Vollbremsung, äußerst wichtig.

Bei der eingangs beschriebenen bekannten Laderaum-Trennvorrichtung gemäß der US-A- 5 584 523 weist das Rollogehäuse zwei endseitige Rollogehäuse-Endkappen aus Kunststoff auf, welche endseitig auf einen blechmantelartigen Körper, der einen Längsschlitz aufweist, aufgesteckt sind. Die Steckhalterung ist durch je einen Niet gesichert. Der Längsschlitz des blechmantelartigen Körpers stellt einen Führungsschlitz für die Werkstoffbahn dar.

Jede Kunststoff-Endkappe besitzt eine axial nach innen und außen vorragende Lagerbuchse, in welcher jeweils ein freier Endbereich eines eine Wickelwelle auf ihrer ganzen axialen Länge durchsetzenden einteiligen Achskörpers aufgenommen ist. Ausschließlich die Rollogehäuse-Endkappen aus Kunststoff dienen der Befestigung des Rollogehäuses im fahrzeugseitigen Einbaufeld.

Bei der in der US-A- 5 584 523 beschriebenen Laderaum-Trennvorrichtung wird es als nachteilig empfunden, dass die endkappenseitigen Lagerbuchsen, der Achskörper und der blechmantelartige Körper bei einer crashbedingten Zugbelastung der Werkstoffbahn durch das Ladegut deformiert werden können. In einem solchen Falle wird bei der bekannten Laderaum-Trennvorrichtung der Sicherheit zwar dadurch in begrenzter Weise Rechnung getragen, dass die Wickelwelle an beiden den beiden Längsseiten des Längsschlitzes des blechmantelartigen Körpers gegebenenfalls festgehalten wird, jedoch ist diese Lösung nicht befriedigend.

Ausgehend von der eingangs beschriebenen, durch offenkundige Vorbenutzung bekannten Laderaum-Trennvorrichtung, liegt der Erfindung die Aufgabe zugrunde, die bekannte Laderaum-Trennvorrichtung so umzugestalten, daß sie auch erhöhten Sicherheitsanforderungen standhält.

Entsprechend der Erfindung wird diese Aufgabe dadurch gelöst, dass die freien Endbereiche des Achskörpers an den Endkappen gegen Axialverschiebung gesichert sind und dass die beiden Endkappen und der Rollogehäuse-Mantel gemeinsam ein einen im statischen Sinne starren Tragkörper darstellendes Rollogehäuse mit beliebigen Haltepunkten für eine fahrzeugseitige Befestigung bilden.

Wesentlich ist zunächst, daß die beiden Endkappen so auf dem Rollogehäuse-Mantel befestigt sind, daß insgesamt ein statisch sicherer, insbesondere gegen Durchbiegung widerstandsfähiger, starrer Tragkörper vorhanden ist. Zugleich sind die beiden freien Endbereiche des Achskörpers an den Endkappen selbst, gegen Axialverschiebung gesichert.

Die Vorteile der erfindungsgemäßen Laderaum-Trennvorrichtung bestehen in erster Linie darin, daß die von der Wickelwelle über deren Lagerung auf die freien Endbereiche des Achskörpers eingeleiteten Kräfte auf kürzestem Wege auf die Achsbefestigung, d.h. auf die Rollogehäuse-Endkappen, übertragen werden. Von dort aus werden die Kräfte entweder über die Rollogehäuse-Endkappen selbst oder über den Rollogehäuse-Mantel in die fahrzeugseitigen Befestigungsstellen übergeleitet.

Darüber hinaus eliminieren der starre Rollogehäuse-Körper und der durchgehende einteilige Achskörper gemeinsam das beim Bekannten auftretende Abknicken der Achslagerung bei stärkerer Belastung. Selbst für den Fall eines Durchbiegens von Wickelwelle und Achskörper sorgt das starre Rollogehäuse in Verbindung mit der Sicherung der Achse gegen deren axiale Verschiebung dafür, daß die über die Werkstoffbahn eingeleiteten Kräfte sicher an die fahrzeugseitigen Befestigungsstellen übertragen werden können.

In weiterer Ausgestaltung der Erfindung ist eine einfache und wirksame Bauform dadurch geschaffen worden, daß jeder freie Endbereich des Achskörpers eine Durchstecköffnung der zugehörigen Endkappe durchsetzt.

Die Sicherung der beiden freien Endbereiche des Achskörpers gegen Axialverschiebung ist zweckmäßig so gestaltet, daß jeder von der Außenfläche der zugehörigen Endkappe vorragende Überstand des freien Endbereichs des Achskörpers mit einer Axialsicherung, wie z.B. mit einem Zylinderstift oder mit einem Seegerring, versehen ist.

Weitere Erfindungsmerkmale sind zusätzlichen Unteransprüchen zu entnehmen.

In den Zeichnungen ist ein bevorzugtes Ausführungsbeispiel entsprechend der Erfindung näher dargestellt, es zeigt,
Fig. 1 einen Teil eines axialen Längsschnitts durch Rollogehäuse und Wickelwelle einer Laderaum-Trennvorrichtung,
Fig. 2 einen radialen Querschnitt entsprechend der in Fig. 1 mit II-II bezeichneten Schnittlinie und
Fig. 3 eine schematische Darstellung des Kräfteverlaufs in der Laderaum-Trennvorrichtung.

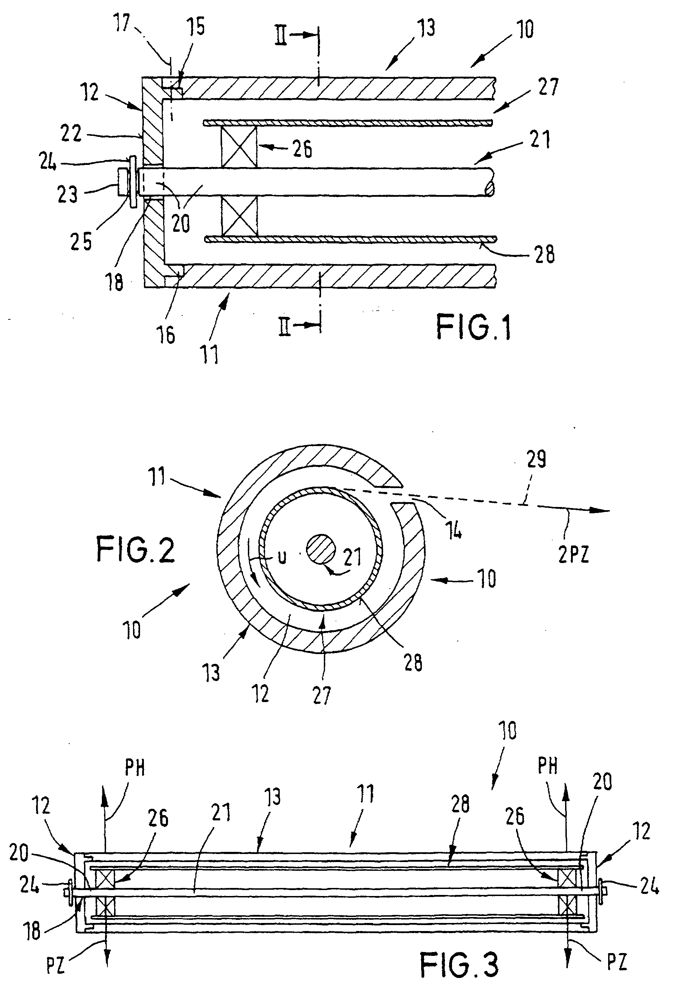

In den Zeichnungen ist eine Laderaum-Trennvorrichtung insgesamt mit 10 bezeichnet. Eine Werkstoffbahn 29, wie Abdeckplane oder Netz, wurde zur Vereinfachung der Zeichnung nur in Fig. 2 mit einer Strichlinie angedeutet.

Die Laderaum-Trennvorrichtung 10 weist ein Rollogehäuse 11 auf, welches im wesentlichen aus zwei Rollogehäuse-Endkappen 12 und aus einem sich zwischen den beiden Endkappen 12 erstreckenden Rollogehäuse-Mantel 13 besteht. Der Rollogehäuse-Mantel 13, ein Leichtmetall-Stranggußprofil, besitzt beim dargestellten Ausführungsbeispiel einen kreisringförmigen Querschnitt. Entlang einer Mantellinie bildet der Rollogehäuse-Mantel 13 einen Längsschlitz 14 für den Durchtritt der Werkstoffbahn 29.

An jeder Endseite verfügt der Rollogehäuse-Mantel 13 über eine innere Ringausnehmung 15, in welche ein radial nach innen versetzter Ringbund 16 der Rollogehäuse-Endkappe 12 eingefügt ist, die eine kreisförmige Kontur aufweist. Der Rollogehäuse-Mantel 13 und die Endkappen 12 sind im Bereich der endkappenseitigen Ringbunde 16 fest miteinander verbunden, beispielsweise mittels der in Fig. 1 angedeuteten Schraubverbindung 17, die sowohl den Rollogehäuse-Mantel 13 im Bereich seiner Ringausnehmung 15 als auch den endkappenseitigen Ringbund 16 radial durchgreift. Mehrere solcher Schraubverbindungen 17 sind gleichmäßig umfangsverteilt vorgesehen.

In jeder Endkappe 12 ist eine zentrale Durchstecköffnung 18 für je einen freien Endbereich 20 eines beide Endkappen 12 durchsetzenden, durchgehenden, einteiligen Achskörpers 21 vorgesehen. Der Achskörper 21 besteht aus einem geeigneten Stahl.

Die freien Endbereiche 20 des Achskörpers 21 sind endkappenseitig in nicht dargestellter Weise gegen Rotation gesichert. Dies kann so geschehen, daß zumindest ein freier Endbereich 20 und die zugehörige Durchstecköffnung 18 mit einander korrespondierenden Abflachungen (nicht gezeichnet) versehen sind.

Zur axialen Lagesicherung des Achskörpers 21 nimmt jeder die Außenfläche 22 einer Endkappe 12 überragende Überstand 23 des freien Endbereichs 20 einen Seegerring 24 in einer diesbezüglichen Ringnut 25 auf. Jeder freie Endbereich 20 des Achskörpers 21 trägt ein Lager, z.B. ein Wälzlager 26, welches außen von dem rohrartigen Wellenkörper einer Wickelwelle 27 übergriffen ist. Der rohrartige Wellenkörper der Wickelwelle 27 besteht aus Stahl oder aus Leichtmetall.

Die Wickelwelle 27, deren Außenmantelfläche 28 die Werkstoffbahn 29 trägt, ist mittels der Rückstellkraft eines nicht dargestellten Federmotors in Aufwickeldrehrichtung u drehangetrieben, während der Achskörper 21 raumfest ist.

Anhand der Fig. 2 und 3 ist vorstellbar, daß bei Einleitung einer Zuglast 2PZ durch die Werkstoffbahn 29 die Außenmantelfläche 28 der Wickelwelle 17 mit einer sich über deren Achslänge verteilenden Zugbelastung beaufschlagt wird, die über die beiden Lager 26 entsprechend den beiden Pfeilen mit jeweils einer Kraft PZ auf den jeweiligen Achskörper 21 einwirkt.

Es ist auch erkennbar, daß die Kräfte PZ auf kürzestem Wege über die freien Endbereiche 20 des Achskörpers 21, über die Durchstecköffnungen 18 und über die Endkappen 12 auf den Rollogehäuse-Mantel 13 weitergegeben und von dort als Haltekräfte PH in die fahrzeugseitigen Befestigungsstellen übertragen werden können.

Da das Rollogehäuse 11 insgesamt einen im statischen Sinne starren Körper darstellt, können die Haltepunkte für die fahrzeugseitige Befestigung beliebig angeordnet sein. Wegen des durchgehend einteiligen Achskörpers 21 ist eine Deformierung der freien Achsendbereiche 20 nahezu ausgeschlossen.

Selbst eine durch übermäßige Zugbelastung der Werkstoffbahn 29 bedingten Durchbiegung des Achskörpers 21 wäre mit der gezeigten Anordnung beherrschbar, zumal die freien Endbereiche 20 des Achskörpers 21 mittels der Seegerringe 24 gegen eine ungewollte Axialverschiebung gesichert sind.

## Patentansprüche

1. Laderaum-Trennvorrichtung (10) für Kraftwagen, insbesondere für Kombinations-Personenkraftwagen, mit einem zwei Rollogehäuse-Endkappen (12) und einen Rollogehäuse-Mantel (13) aufweisenden Rollogehäuse (11), und mit einer entgegen dem Drehmoment eines Motors von einer Wickelwelle (27) abrollbaren Werkstoffbahn (29), die zwischen fahrzeugseitigen Befestigungsstellen und der Wickelwelle (27) lösbar aufspannbar ist, welche einen etwa rohrartigen Wellenkörper bildet, der beidendseitig auf einem Achskörper (21) drehgelagert ist, der einteilig ausgebildet ist und die Wickelwelle (27) auf ihrer ganzen axialen Länge durchsetzt, wobei die beiden freien Endbereiche (20) des Achskörpers (21) in den beiden Endkappen (12) gehalten und im Rollogehäuse (11) gegen Axialverschiebung gesichert sind, wobei die beiden Endkappen (12) zwischen sich den etwa hohlzylindrischen Rollogehäuse-Mantel (13) halten, welcher entlang einer Mantellinie einen die Werkstoffbahn (29) umgebenden Längsschlitz (14) bildet, **dadurch gekennzeichnet**, dass die freien Endbereiche (20) des Achskörpers (21) an den Endkappen (12) gegen Axialverschiebung gesichert sind und dass die beiden Endkappen (12) und der Rollogehäuse-Mantel (13) gemeinsam ein einen im statischen Sinne starren Tragkörper darstellendes Rollogehäuse (11) mit beliebigen Haltepunkten für eine fahrzeugseitige Befestigung bilden.

2. Laderaum-Trennvorrichtung nach Anspruch 1, **dadurch gekennzeichnet**, dass jeder freie Endbereich (20) des Achskörpers (21) eine Durchstecköffnung (18) der zugehörigen Endkappe (12) durchsetzt.

3. Laderaum-Trennvorrichtung nach Anspruch 1, **dadurch gekennzeichnet**, daß jeder von der Außenfläche (22) der zugehörigen Endkappe (12) vorragende Überstand (23) des freien Endbereichs (20) des Achskörpers (21) mit einer Axialsicherung, wie z.B. mit einem Zylinderstift oder mit einem Seegerring (24), versehen ist.

4. Laderaum-Trennvorrichtung nach einem der Ansprüche 1 bis 3, **dadurch gekennzeichnet**, daß beide Endkappen (12) mit dem Rollogehäuse-Mantel (13) verschraubt (bei 17), verschweißt oder verklebt sind.

5. Laderaum-Trennvorrichtung nach einem der Ansprüche 1 bis 4, **dadurch gekennzeichnet**, daß Rollogehäuse-Mantel (13) , Endkappen (12) und Achskörper (21) aus Metall bestehen.

6. Laderaum-Trennvorrichtung nach Anspruch 5, **dadurch gekennzeichnet**, daß der Rollogehäuse-Mantel (13) ein Leichtmetall-Stranggußprofil ist.

7. Laderaum-Trennvorrichtung nach einem der Ansprüche 1 bis 6, **dadurch gekennzeichnet**, daß die freien Endbereiche (20) des Achskörpers (21) in den Endkappen (12) gegen Drehung gesichert sind.

## Claims

1. Loading space partitioning device (10) for motor vehicles, in particular for estate cars, with a rollup web housing (11) having two roll-up web housing end caps (12) and a roll-up web housing case (13), and with a material web (29) which can be unwound from a winding shaft (27) counter to the torque of a motor and releasably stretched out between fastening points on the vehicle and the winding shaft (27), which winding shaft forms an approximately tubular shaft body which is rotatably mounted at both ends on an axle body (21) formed in one piece and passing through the winding shaft (27) over the entire axial length thereof, the two free end regions (20) of the axle body (21) being held in the two end caps (12) and secured in the roll-up web housing (11) so as to be locked against axial displacement, the two end caps (12) holding between them the approximately hollow-cylindrical roll-up web housing case (13), which forms, along a surface line, a longitudinal slot (14) surrounding the material web (29), **characterised in that** the free end regions (20) of the axle body (21) are secured to the end caps (12) so as to be locked against axial displacement and in that the two end caps (12) and the roll-up web housing case (13) together form a roll-up web housing (11) which constitutes a statically rigid load-bearing body with any desired holding points for fastening to the vehicle.

2. Loading space partitioning device according to Claim 1, **characterised in that** each free end region (20) of the axle body (21) passes through a through-opening (18) in the associated end cap (12).

3. Loading space partitioning device according to Claim 1, **characterised in that** each projecting length (23), protruding from the outer surface (22) of the associated end cap (12), of the free end region (20) of the axle body (21) is provided with an axial-locking means, such as, for example, a cylindrical pin or a circlip (24).

4. Loading space partitioning device according to one of Claims 1 to 3, **characterised in that** both end caps (12) are screwed (at 17), welded or adhesively bonded to the roll-up web housing case (13).

5. Loading space partitioning device according to one of Claims 1 to 4, **characterised in that** the roll-up web housing case (13), end caps (12) and axle body (21) consist of metal.

6. Loading space partitioning device according to Claim 5, **characterised in that** the roll-up web housing case (13) is a light-metal extruded section.

7. Loading space partitioning device according to one of Claims 1 to 6, **characterised in that** the free end regions (20) of the axle body (21) are secured in the end caps (12) so as to be locked against rotation.

## Revendications

1. Dispositif de séparation de compartiment de chargement (10), pour des véhicules automobiles, en particulier pour des voitures particulières, commerciales, avec un boîtier de store (11) présentant deux capuchon d'extrémité de boîtier de store (12) et une enveloppe de boîtier de store (13), avec une bande de matériau (29) déroulable depuis un arbre d'enroulement (27), à l'encontre du couple de rotation d'un moteur, la bande étant susceptible d'être tendue de façon desserrable, entre des points de fixation situés côté véhicule et l'arbre d'enroulement (27), qui constitue un corps d'arbre à peu près du genre d'un tube, ce corps étant monté à rotation aux deux extrémités sur un corps d'axe (21) qui est réalisé d'une seule pièce et qui traverse l'arbre d'enroulement (27) sur la totalité de sa longueur axiale, les deux zones d'extrémité (20) libres du corps d'axe (21) étant fixées dans les deux capuchons d'extrémité (12) et assurés, pour empêcher tout déplacement axial dans le boîtier de store (11), les deux capuchons d'extrémité (12) maintenant entre eux l'enveloppe de boîtier de store (13) à peu près cylindrique, creuse, qui forme, le long d'une ligne d'enveloppe, une fente longitudinale (14) entourant la bande de matériau (29), caractérisé par le fait que les zones d'extrémité libres (20) du corps d'axe (21) sont assurés sur les capuchons d'extrémité (12) pour empêcher tout déplacement axial, et par le fait que les deux capuchons d'extrémité 12 et l'enveloppe de boîtier. de store (13) forment conjointement un boîtier de store (11), constituant au sens statique un corps rigide, avec des points de maintien quelconque pour une fixation côté véhicule.

2. Dispositif de séparation de compartiment de chargement selon la revendication 1, caractérisé par le fait que chaque zone d'extrémité libre (20) du corps d'axe (21) traverse une ouverture d'enfichage (18) du capuchon d'extrémité (12) afférent.

3. Dispositif de séparation de compartiment de chargement selon la revendication 1, caractérisé par le fait que chaque dépassement (23), faisant saillie de la surface extérieure (22) du capuchon d'extrémité (12) afférent, de la zone d'extrémité libre (20) du corps d'axe (21) est muni d'une sécurité axiale, telle que, par exemple, avec une goupille cylindrique ou avec un circlip (24).

4. Dispositif de séparation de compartiment de chargement selon l'une des revendications 1 à 3, caractérisé par le fait que les deux capuchons d'extrémité (12) sont vissés (en 17), soudés ou collés à l'enveloppe de boîtier de store (13).

5. Dispositif de séparation de compartiment de chargement selon l'une des revendications 1 à 4, caractérisé par le fait que l'enveloppe de boîtier de store (13), les capuchons d'extrémité (12) et le corps d'axe (21) sont en métal.

6. Dispositif de séparation de compartiment de chargement selon la revendication 5, caractérisé par le fait que l'enveloppe de boîtier de store (13) est un profilé moulé d'extrusion, en métal léger.

7. Dispositif de séparation de compartiment de chargement selon l'une des revendications 1 à 6, caractérisé par le fait que les zones d'extrémité libres (20) du corps d'axe (21) sont bloquées en rotation dans les capuchons d'extrémité (12).
